# EUROPEAN PATENT APPLICATION

(11) **EP 3 648 239 A1**
(43) Date of publication of application: **06.05.2020**
(21) Application number: 18822875.3
(22) Date of filing: 27.06.2018
(51) Int. Cl.: H01M 10/613

(54) **LITHIUM ION POUCH CELL**

(30) Priority: 28.06.2017 CN 201710503413; 28.06.2017 CN 201710503427
(71) Applicant: Changsha Junengchong New Energy Co., Ltd, Changsha, Hunan 410205 (CN)
(72) Inventor: QIU, Boqian, Changsha Hunan 410205 (CN)
(74) Representative: Zaboliene, Reda
(86) International application number: PCT/CN2018/093104
(87) International publication number: WO 2019/001467

(57) **Abstract**

A lithium ion soft battery includes a package bag, a positive electrode tab, a negative electrode tab, and a battery cell received in the package bag. The positive electrode tab and the negative electrode tab protrude from the package bag. The battery cell includes a positive electrode plate, a negative electrode plate, and a separator spaced between the positive electrode plate and the negative electrode plate. The positive electrode plate, the separator, and the negative electrode plate are sequentially laminated together and then wound together to form the battery cell. The positive electrode plate includes a positive electrode tab. The negative electrode plate includes a negative electrode tab. The top cover includes a positive terminal post electrically connected to the positive terminal tab and a negative terminal post electrically connected to the negative electrode tab. The negative electrode plate includes a negative current collector and negative active material layers coated on the negative current collector. The positive electrode plate includes a positive current collector and positive active material layers coated on the positive current collector. Heat conducting and collecting bodies are formed on the positive electrode plate and/or the negative electrode plate. Each heat conducting and collecting body is a portion of the positive current collector not coated by the positive active material layer or a portion of the negative current collector not coated by the negative active material layer. The at least two heat conducting and collecting bodies overlap and are stacked together to form at least one heat converging path, which is configured to transmit heat energy into or out of the battery cell. A pipe containing air conditioning refrigerant is disposed on or connected to the heat converging path. The pipe containing air conditioning refrigerant and the heat converging path cooperatively form a heat converging path assembly. Too high or too low temperature of the battery can be avoided.

## Description

### FIELD

The subject matter herein generally relates to lithium ion batteries, and more particularly, to a lithium ion soft battery.

### BACKGROUND

Traffic on the roads brings pressure on the energy crisis and environmental pollution, thus it is urgent to develop and research vehicles powered by efficient, clean and safe energy to achieve energy conservation and emission reduction. Lithium ion batteries have become the best candidates for power systems of the new energy vehicles because of high specific energy, no pollution, and no memory effect of the lithium ion batteries. However, the lithium ion batteries are very sensitive to temperature, and efficient discharge and good performance of the battery pack can be only obtained within a suitable temperature range. Operating at an elevated temperature may cause the lithium ion battery to age faster and increase its thermal resistances faster. Furthermore, the cycling time becomes less, the service life becomes shorter, and even thermal runaway problems occur at an elevated operating temperature. However, operating at too low a temperature may lower the conductivity of the electrolyte and the ability to conduct active ions, resulting an increase of the impedance, and a decrease in the capacity of the lithium ion batteries.

Conventionally, the cell is positioned to improve the fluid flow path and increase the heat dissipation. The battery casing may also be improved by replacing the aluminum alloy shell material with the composite of thermoelectric material and aluminum, and by adding a plurality of heat dissipating ribs to the side of the battery casing. The electrode plate may also be extended into the electrolyte to transmit heat energy to the battery casing through the electrolyte and then to the outside environment. Although some heat is dissipated, the heat dissipation efficiency is generally low because the heat cannot be directly discharged from the electrode plates, the main heat generating component, to the outside environment. Therefore, a new design of a lithium ion soft battery is desired.

### SUMMARY

To overcome the above shortcomings, the present disclosure provides a lithium ion soft battery, which can prevent the temperature of the battery from being too high or too low.

The present disclosure provides a lithium ion soft battery, which includes a package bag, a positive electrode tab, a negative electrode tab, and a battery cell received in the package bag. The positive electrode tab and the negative electrode tab protrude from the package bag. The battery cell includes a positive electrode plate, a negative electrode plate, and a separator spaced between the positive electrode plate and the negative electrode plate. The positive electrode plate, the separator, and the negative electrode plate are sequentially laminated together and then wound together to form the battery cell. The positive electrode plate includes a positive electrode tab. The negative electrode plate includes a negative electrode tab. The top cover includes a positive terminal post electrically connected to the positive terminal tab and a negative terminal post electrically connected to the negative electrode tab. The negative electrode plate includes a negative current collector and negative active material layers coated on the negative current collector. The positive electrode plate includes a positive current collector and positive active material layers coated on the positive current collector. Heat conducting and collecting bodies are formed on the positive electrode plate and/or the negative electrode plate. Each heat conducting and collecting body is a portion of the positive current collector not coated by the positive active material layer or a portion of the negative current collector not coated by the negative active material layer. The at least two heat conducting and collecting bodies overlap and are stacked together to form at least one heat converging path, which is configured to transmit heat energy into or out of the battery cell. A pipe containing air conditioning refrigerant is disposed on or connected to the heat converging path. The pipe containing air conditioning refrigerant and the heat converging path cooperatively form a heat converging path assembly. By stacking the heat conducting and collecting bodies to form the heat converging path and heating or cooling the heat converging path through the air conditioning refrigerant, the internal temperature of the battery is increased or decreased, thereby avoiding low working efficiency and low service life of the battery. The temperature of the battery can be maintained within a suitable range, which can increase working efficiency and service life of the battery. Potential safety hazards can be avoided. The heat conducting and collecting body can be integrally formed with the positive electrode plate, which simplifies the manufacturing process and increase the manufacturing efficiency.

The present disclosure further provides a lithium ion soft battery, which includes a package bag, a positive electrode tab, a negative electrode tab, and a battery cell received in the package bag. The positive electrode tab and the negative electrode tab protrude from the package bag. The battery cell includes a positive electrode plate, a negative electrode plate, and a separator spaced between the positive electrode plate and the negative electrode plate. The positive electrode plate, the separator, and the negative electrode plate are sequentially laminated together and then wound together to form the battery cell. The positive electrode plate includes a positive electrode tab. The negative electrode plate includes a negative electrode tab. The top cover includes a positive terminal post electrically connected to the positive terminal tab and a negative terminal post electrically connected to the negative electrode tab. The negative electrode plate includes a negative current collector and negative active material layers coated on the negative current collector. The positive electrode plate includes a positive current collector and positive active material layers coated on the positive current collector. The battery cell includes at least two heat conducting and collecting bodies are formed on the positive electrode plate and/or the negative electrode plate. Each heat conducting and collecting body is a portion of the positive current collector not coated by the positive active material layer or a portion of the negative current collector not coated by the negative active material layer. The at least two heat conducting and collecting bodies overlap and are stacked together to form at least one heat converging path, which is configured to transmit heat energy into or out of the battery cell. A heat pipe comprising a pipe casing and a wick structure disposed in the pipe casing is disposed on or connected to the heat converging path. The heat pipe and the heat converging path cooperatively form a heat converging path assembly. As such, the heat energy of the electrode plates, the main heat generating component, can be quickly converged on the heat converging path, and then exchanged between the heat converging path and the heat pipe comprising the pipe casing and the wick structure disposed in the pipe casing. When the internal temperature of the battery is too low, the heat converging path can also be heated. Thus, the electrode plates of the battery can work under the suitable temperature, and the battery can maintain in a best state for charging and discharging. The capacity fading is restrained, and the service life of the battery is increased. The heat conducting and collecting body can be integrally formed with the positive electrode plate, which simplifies the manufacturing process and increase the manufacturing efficiency.

In an embodiment, the at least two heat conducting and collecting bodies are connected to form the heat converging path by welding. The heat conducting and collecting bodies can be connected together without any extra component. Heat can be conducted into or out of the heat converging path, thereby maintaining the temperature of the battery within a suitable range.

In the present disclosure, the welding can be ultrasonic welding, laser welding, or friction welding.

In an embodiment, the heat conducting and collecting bodies can also be connected together to form the heat converging path by bolting or riveting. As such, the heat conducting and collecting bodies can be connected together, and heat can be conducted into or out of the heat converging path, thereby maintaining the temperature of the battery within a suitable range.

The heat conducting and collecting bodies are bent towards each other before connected together to form the heat converging path. Therefore, the heat absorbed by the heat conducting and collecting bodies is converged, which facilitates cooling or heating of the battery.

Furthermore, the heat conducting and collecting bodies are bent to be perpendicular to the positive electrode plate or the negative electrode plate. The heat conducting and collecting bodies can also be bent to be inclined with the positive electrode plate or the negative electrode plate by an angle between 0 degree to 89 degrees. Therefore, the heat absorbed by the heat conducting and collecting bodies is converged, which facilitates cooling or heating of the battery.

In an embodiment, the entirety of the heat conducting and collecting bodies can be bent toward a single direction to form the heat converging path, which facilitates the connection of the heat conducting and collecting bodies and facilitates cooling or heating of the battery.

In an embodiment, the heat conducting and collecting bodies can also be bent toward opposite directions to form the heat converging path, which facilitates cooling or heating of the battery.

In an embodiment, a portion of the heat conducting and collecting bodies are bent, and the portion is connected to the remaining portion of the heat conducting and collecting bodies, the remaining portion of the heat conducting and collecting bodies is straight. This facilitates cooling or heating of the battery.

In an embodiment, the portion of the heat conducting and collecting bodies is bent towards a single direction, which can simplify the manufacturing process and facilitate cooling or heating of the battery.

In an embodiment, the portion of the heat conducting and collecting bodies can also bent towards opposite directions, which facilitates cooling or heating of the battery.

In an embodiment, at least a portion of the heat conducting and collecting bodies defines a plurality of holes, which can pass through the heat conducting and collecting body and have a 3D internal structure. At least a portion of the heat conducting and collecting bodies can also define a concave and convex surface. This can increase the surface area of the heat conducting and collecting bodies and facilitates cooling or heating of the battery.

In an embodiment, at least one of the heat conducting and collecting bodies, which define a plurality of holes, can also be disposed among the other heat conducting and collecting bodies. The holes can pass through the heat conducting and collecting body and have a mesh structure or a 3D internal structure. The heat conducting and collecting body can also define a concave and convex surface. This can increase the cooling or heating abilities.

In an embodiment of the present disclosure, a heat dissipation member is connected to the heat converging path, which can quickly conduct the heat into or out of the heat converging path.

Furthermore, the heat dissipation member can be a heat sink, which can quickly conduct the heat into or out of the heat converging path.

Furthermore, the heat dissipation member can be a metal sheet, which can quickly conduct the heat into or out of the heat converging path.

Furthermore, the metal sheet and the heat conducting and collecting body can be made of a same material, which facilitates the connection between the metal sheet and the heat conducting and collecting body.

In an embodiment, a plurality of fins are disposed among or on the heat conducting and collecting bodies, which can quickly conduct the heat into or out of the heat converging path and decrease the temperature of the battery.

In an embodiment, a heat sink is disposed on the heat conducting and collecting bodies, which can maintain the temperature of the battery within a suitable range.

In an embodiment, a heat exchanging device is connected to the heat converging path, which can maintain the temperature of the heat converging path within a suitable range, thereby avoiding damages to the battery.

Furthermore, the heat exchanging device is connected to the heat converging path by welding. The heat converging path and the second heat exchanging device are connected together without any extra component, which also facilitates the connection.

Furthermore, the heat converging path and the second heat exchanging device can also be connected together by bolting, gluing, or riveting, which allows the connection to be stable.

In an embodiment, the heat conducting and collecting body can have an insulating layer, an insulating and heat conductive layer, or an insulating film on a surface thereof. As such, a short circuit at the heat conducting and collecting bodies can be avoided. Potential safety hazards can further be avoided.

Furthermore, an insulating layer or an insulating film is disposed on a surface of the fluid-containing pipe. As such, a short circuit at the fluid-containing pipe can be avoided. Potential safety hazards can further be avoided.

In an embodiment, the at least one heat converging path is disposed at an end having a positive electrode tab, an end opposite to the positive electrode tab, or a side.

In an embodiment, one, two, or three of the heat converging paths are disposed at the end having the positive electrode tab.

In an embodiment, the heat conducting and collecting body is protrude from the positive electrode plate and the negative electrode plate, which facilitates conduction and dissipation of the heat energy.

Furthermore, portions of the heat conducting and collecting body protruding from the positive electrode plate and the negative electrode plate is further inserted into the electrolyte received in the metallic casing. As such, the heat energy from the heat conducting and collecting body can be conducted into the electrolyte and further to the external surface of the battery. Therefore, the heat energy is prevented from being accumulated in the battery due to poor heat conduction of the separator. Furthermore, the heat energy in the electrolyte can further quickly move to the electrode plates, which prevents the temperature of the battery from being too low.

Furthermore, a heat exchanging device is disposed in the electrolyte for heating or cooling the electrolyte. The electrolyte can in turn heat or cool the heat conducting and collecting bodies, thereby maintaining the temperature of the battery within a suitable range.

The heat conducting and collecting body can also be recessed with respect to the positive and the negative electrode plates, which saves the internal space and increases the capacity of the battery in casing of a certain size.

In an embodiment, a thickness of the entirety of the heat conducting and collecting body is same of that of the interconnecting portion between the heat conducting and collecting body and the positive and the negative electrode plates. As such, the heat conducting property of the heat conducting and collecting body is improved, and the manufacturing process is simplified.

In an embodiment, the exposing current collector is parallel to the positive active material layer.

Furthermore, an end of the battery is totally the exposing current collector.

In an embodiment, the exposing current collector covers a central portion of the positive active material layer.

A temperature sensor is disposed on the heat converging path, which can precisely sense the temperature of the heat converging path.

A temperature sensor is disposed on the heat exchanging device, which can precisely sense the temperature of the heat exchanging device.

The temperature sensor can be a thin-film temperature sensor.

The positive active material of the positive active material layer is lithium iron phosphate, lithium cobalt oxide, lithium manganate, or a ternary material.

The negative active material of the negative active material layers is carbon, tin-based negative material, transition metal nitride containing lithium or alloy.

### BRIEF DESCRIPTION OF THE DRAWINGS

FIG. 1 is a schematic view of a first embodiment according to the present disclosure.
FIG. 2 is a cross-sectional view of FIG. 1.
FIG. 3 is a schematic view of third embodiment according to the present disclosure.
FIG. 4 is a cross-sectional view of FIG. 3.
FIG. 5 is a schematic view of fifth embodiment according to the present disclosure.
FIG. 6 is a schematic view of sixth embodiment according to the present disclosure.
FIG. 7 is a schematic view of seventh embodiment according to the present disclosure.
FIG. 8 is a schematic view of eighth embodiment according to the present disclosure.
FIG. 9 is a schematic view of ninth embodiment according to the present disclosure.
FIG. 10 is a cross-sectional view of FIG. 9.
FIG. 11 is a schematic view of eleventh embodiment according to the present disclosure.
FIG. 12 is a cross-sectional view of FIG. 11.
FIG. 13 is a schematic view of thirteenth embodiment according to the present disclosure.
FIG. 14 is a cross-sectional view of FIG. 13.
FIG. 15 is a schematic view of fourteenth embodiment according to the present disclosure.
FIG. 16 is a schematic view of sixteenth embodiment according to the present disclosure.
FIG. 17 is a schematic view of seventeenth embodiment according to the present disclosure.

### DETAILED DESCRIPTION

Implementations of the disclosure will now be described, by way of embodiments only, with reference to the drawings.

The present disclosure provides a lithium ion soft battery, which includes a package bag, a positive electrode tab, a negative electrode tab, and a battery cell received in the package bag. The positive electrode tab and the negative electrode tab protrude from the package bag. The battery cell includes a positive electrode plate, a negative electrode plate, and a separator spaced between the positive electrode plate and the negative electrode plate. The positive electrode plate, the separator, and the negative electrode plate are sequentially laminated together and then wound together to form the battery cell. The positive electrode plate includes a positive electrode tab. The negative electrode plate includes a negative electrode tab. The top cover includes a positive terminal post electrically connected to the positive terminal tab and a negative terminal post electrically connected to the negative electrode tab. The negative electrode plate includes a negative current collector and negative active material layers coated on the negative current collector. The positive electrode plate includes a positive current collector and positive active material layers coated on the positive current collector. Heat conducting and collecting bodies are formed on the positive electrode plate and/or the negative electrode plate. Each heat conducting and collecting body is a portion of the positive current collector not coated by the positive active material layer or a portion of the negative current collector not coated by the negative active material layer. The at least two heat conducting and collecting bodies overlap and are stacked together to form at least one heat converging path, which is configured to transmit heat energy into or out of the battery cell. A pipe containing air conditioning refrigerant is disposed on or connected to the heat converging path. The pipe containing air conditioning refrigerant and the heat converging path cooperatively form a heat converging path assembly.

The present disclosure further provides a lithium ion soft battery, which includes a package bag, a positive electrode tab, a negative electrode tab, and a battery cell received in the package bag. The positive electrode tab and the negative electrode tab protrude from the package bag. The battery cell includes a positive electrode plate, a negative electrode plate, and a separator spaced between the positive electrode plate and the negative electrode plate. The positive electrode plate, the separator, and the negative electrode plate are sequentially laminated together and then wound together to form the battery cell. The positive electrode plate includes a positive electrode tab. The negative electrode plate includes a negative electrode tab. The top cover includes a positive terminal post electrically connected to the positive terminal tab and a negative terminal post electrically connected to the negative electrode tab. The negative electrode plate includes a negative current collector and negative active material layers coated on the negative current collector. The positive electrode plate includes a positive current collector and positive active material layers coated on the positive current collector. Heat conducting and collecting bodies are formed on the positive electrode plate and/or the negative electrode plate. Each heat conducting and collecting body is a portion of the positive current collector not coated by the positive active material layer or a portion of the negative current collector not coated by the negative active material layer. The at least two heat conducting and collecting bodies overlap and are stacked together to form at least one heat converging path, which is configured to transmit heat energy into or out of the battery cell. A heat pipe comprising a pipe casing and a wick structure disposed in the pipe casing is disposed on or connected to the heat converging path. The heat pipe and the heat converging path cooperatively form a heat converging path assembly.

In the drawings, 1 represents the battery casing, 2 represents the battery cell, 3 represents the positive electrode tab, 4 represents the negative electrode tab, 5 represents the heat conducting and collecting body, 6 represents the heat converging path, 7 represents the fluid-containing pipe, 8 represents the heat exchanging device, 9 represents the insulating layer.

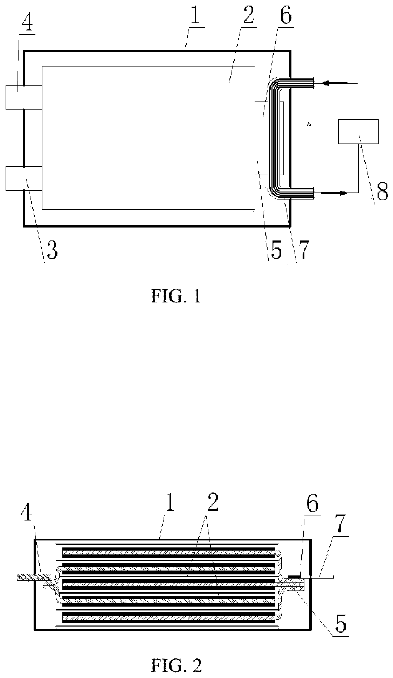

Referring to FIG. 1, the positive electrode tab and the negative electrode tab are disposed at the same end. The heat conducting and collecting bodies and the heat converging path are disposed at the end opposite to the electrode tabs, and are connected to the positive electrode tab. FIG. 2 is a cross-sectional view of FIG. 1, which shows that the heat conducting and collecting bodies are connected to the positive electrode tab.

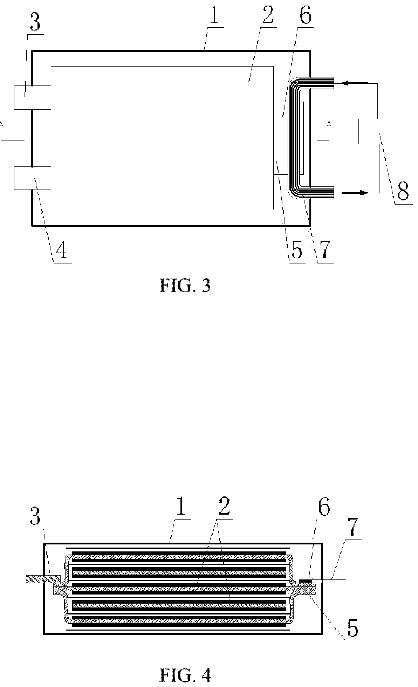

Referring to FIG. 3, the positive electrode tab and the negative electrode tab are disposed at the same end. The heat conducting and collecting bodies and the heat converging path are disposed at the end opposite to the electrode tabs, and are connected to the negative electrode tab. FIG. 4 is a cross-sectional view of FIG. 3, which shows that the heat conducting and collecting bodies are connected to the positive electrode tab.

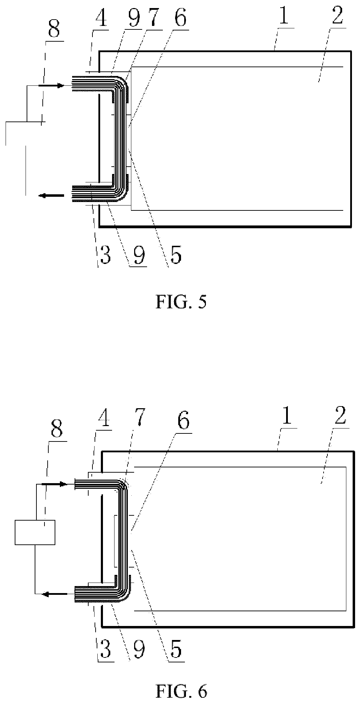

Referring to FIG. 5, the positive electrode tab, the negative electrode tab, and the heat conducting and collecting bodies are disposed at the same end. The heat conducting and collecting bodies is disposed between the positive electrode tab and the negative electrode tab. An inlet section of the fluid-containing pipe, which is connected to the heat conducting and collecting bodies, is disposed on the negative electrode tab, and an outlet section of the fluid-containing pipe is disposed on the positive electrode tab. Both the inlet section and the outlet section of the fluid-containing pipe are surrounded by a insulating layer, which isolates the fluid-containing pipe from the electrode tabs.

Referring to FIG. 6, the positive electrode tab, the negative electrode tab, and the heat conducting and collecting bodies are disposed at the same end. The heat conducting and collecting bodies is disposed between the positive electrode tab and the negative electrode tab. The inlet section of the fluid-containing pipe, which is connected to the heat conducting and collecting bodies, is disposed on the negative electrode tab, and the outlet section of the fluid-containing pipe is disposed on the positive electrode tab. The outlet section of the fluid-containing pipe is surrounded by the insulating layer, which isolates the fluid-containing pipe from the electrode tabs.

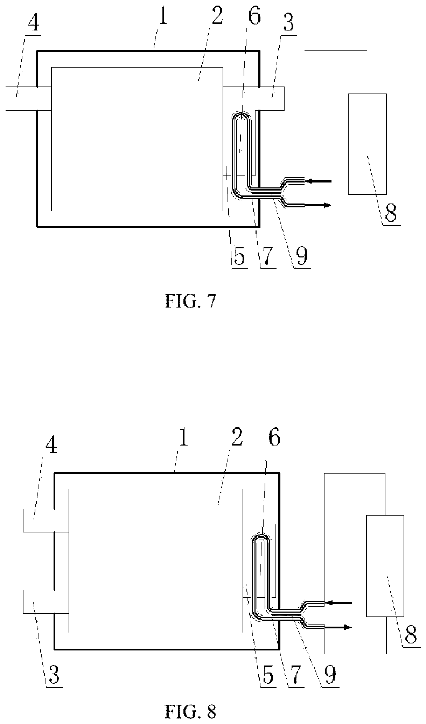

Referring to FIG. 7, the positive electrode tab and the negative electrode tab are disposed at opposite ends. The heat conducting and collecting bodies is disposed on and connected to the positive electrode tab. Both the inlet section and the outlet section of the fluid-containing pipe are disposed at a same port of the battery, and are surrounded by the insulating layer, which isolates the fluid-containing pipe from the electrode tabs and also isolates the heat energy.

Referring to FIG. 8, the positive electrode tab and the negative electrode tab are disposed at the same end of the battery. The heat conducting and collecting bodies are disposed at the end of opposite to the electrode tabs. Both the inlet section and the outlet section of the fluid-containing pipe, which is connected to the heat conducting and collecting bodies, are disposed at a same port of the battery, and are surrounded by the insulating layer, which isolates the fluid-containing pipe from the electrode tabs and also isolates the heat energy.

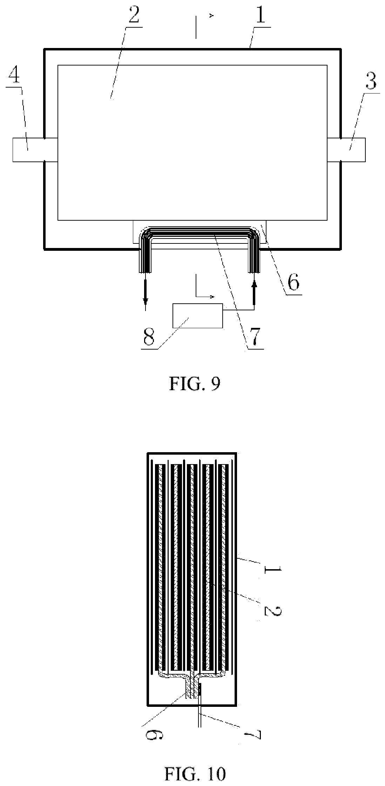

Referring to FIG. 9, the positive electrode tab and the negative electrode tab are disposed at opposite ends of the battery. The heat conducting and collecting bodies are disposed at the side of the battery. The inlet section and the outlet section of the fluid-containing pipe, which is connected to the heat conducting and collecting bodies, are disposed two ports of the battery. FIG. 10 is a cross-sectional view of FIG. 9.

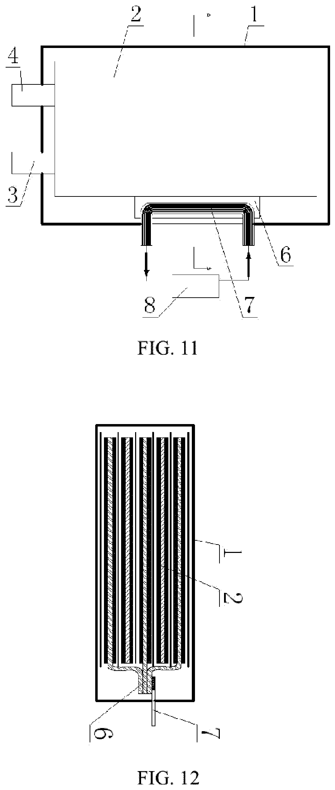

Referring to FIG. 11, the positive electrode tab and the negative electrode tab are disposed at the same end of the battery. The heat conducting and collecting bodies are disposed at the side of the battery. The inlet section and the outlet section of the fluid-containing pipe, which is connected to the heat conducting and collecting bodies, are disposed at two ports of the battery. FIG. 12 is a cross-sectional view of FIG. 11.

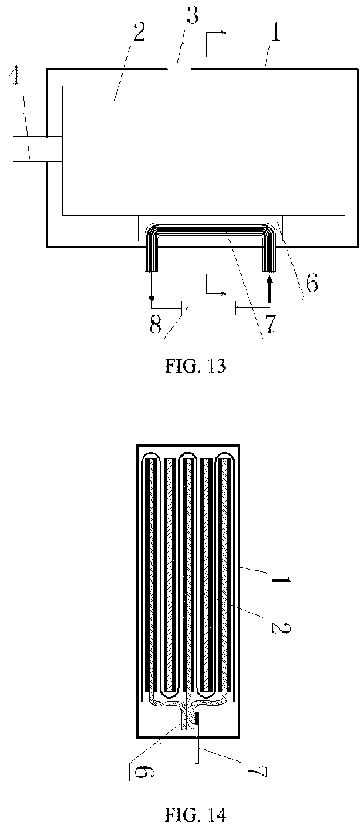

Referring to FIG. 13, the positive electrode tab and the negative electrode tab are respectively disposed at an end and a side. The heat conducting and collecting bodies are disposed at another side opposite to the positive electrode tab. The inlet section and the outlet section of the fluid-containing pipe, which is connected to the heat conducting and collecting bodies, are disposed at two ports of the battery. FIG. 14 is a cross-sectional view of FIG. 13.

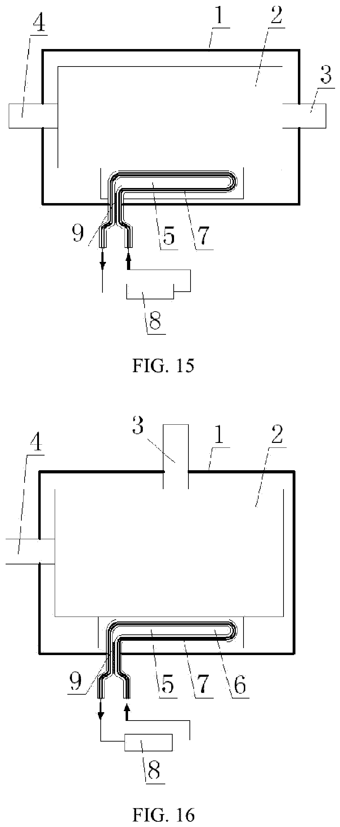

Referring to FIG. 15, the positive electrode tab and the negative electrode tab are disposed at opposite ends of the battery. The heat conducting and collecting bodies are disposed at the side of the battery, and are connected to the positive electrode tab. Both the inlet section and the outlet section of the fluid-containing pipe, which is connected to the heat conducting and collecting bodies, are disposed at the same port of the battery, and are surrounded by the insulating layer.

Referring to FIG. 16, the positive electrode tab and the negative electrode tab are respectively disposed at an end and a side of the battery. The heat conducting and collecting bodies are disposed at another side of the battery opposite to the positive electrode tab. Both the inlet section and the outlet section of the fluid-containing pipe, which is connected to the heat conducting and collecting bodies, are disposed at the same port of the battery, and are surrounded by the insulating layer.

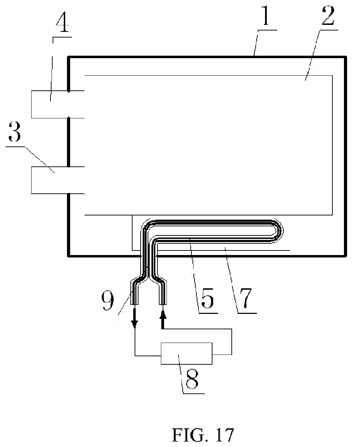

Referring to FIG. 17, the positive electrode tab and the negative electrode tab are disposed at the same end. The heat conducting and collecting bodies are disposed at the side of the battery, and are connected to the positive electrode tab. Both the inlet section and the outlet section of the fluid-containing pipe, which is connected to the heat conducting and collecting bodies, are disposed at the same port of the battery, and are surrounded by the insulating layer.

Implementations of the above disclosure will now be described by way of embodiments only. It should be noted that devices and structures not described in detail are understood to be implemented by the general equipment and methods available in the art.

It is to be understood, even though information and advantages of the present embodiments have been set forth in the foregoing description, together with details of the structures and functions of the present embodiments, the disclosure is illustrative only; changes may be made in detail, especially in matters of shape, size, and arrangement of parts within the principles of the present embodiments to the full extent indicated by the plain meaning of the terms in which the appended claims are expressed.

## Claims

1. A lithium ion soft battery comprising:
a battery cell, a package bag, a positive electrode tab, a negative electrode tab, and a battery cell received in the package bag, the positive electrode tab and the negative electrode tab protrude from the package bag, the battery cell comprising a positive electrode plate, a negative electrode plate, and a separator spaced between the positive electrode plate and the negative electrode plate, the positive electrode plate, the separator, and the negative electrode plate sequentially laminated together and then wound together to form the battery cell, the positive electrode plate comprising a positive electrode tab, the negative electrode plate comprising a negative electrode tab, the top cover comprising a positive terminal post electrically connected to the positive terminal tab and a negative terminal post electrically connected to the negative electrode tab, the negative electrode plate comprising a negative current collector and a negative active material layer coated on the negative current collector, the positive electrode plate comprising a positive current collector and a positive active material layer coated on the positive current collector, **characterized in that**:
heat conducting and collecting bodies are formed on the positive electrode plate and the negative electrode plate, each of the heat conducting and collecting bodies being a portion of the positive current collector which is not coated by the positive active material layer or a portion of the negative current collector which is not coated by the negative active material layer;
the at least two heat conducting and collecting bodies overlap and are stacked together to form at least one heat converging path, which being configured to transmit heat energy into or out of the battery cell, a pipe containing air conditioning refrigerant is connected to the heat converging path, the pipe containing air conditioning refrigerant and the heat converging path cooperatively form a heat converging path assembly.

2. A lithium ion soft battery comprising a package bag, a positive electrode tab, a negative electrode tab, and a battery cell received in the package bag. The positive electrode tab and the negative electrode tab protrude from the package bag, the battery cell comprising a positive electrode plate, a negative electrode plate, and a separator spaced between the positive electrode plate and the negative electrode plate, the positive electrode plate, the separator, and the negative electrode plate sequentially laminated together and then wound together to form the battery cell, the positive electrode plate comprising a positive electrode tab, the negative electrode plate comprising a negative electrode tab, the top cover comprising a positive terminal post electrically connected to the positive terminal tab and a negative terminal post electrically connected to the negative electrode tab, the negative electrode plate comprising a negative current collector and negative active material layers coated on the negative current collector, the positive electrode plate comprising a positive current collector and positive active material layers coated on the positive current collector, **characterized in that**: heat conducting and collecting bodies are formed on the positive electrode plate and the negative electrode plate, each heat conducting and collecting body is a portion of the positive current collector not coated by the positive active material layer or a portion of the negative current collector not coated by the negative active material layer, the at least two heat conducting and collecting bodies stacked together to form at least one heat converging path, which is configured to transmit heat energy into or out of the battery cell, a heat pipe comprising a pipe casing and a wick structure disposed in the pipe casing is disposed on or connected to the heat converging path, the heat pipe and the heat converging path cooperatively form a heat converging path assembly.

3. The lithium ion soft battery of claim 1 or claim 2, wherein the at least two heat conducting and collecting bodies spacedly overlap and are stacked together to form at least one heat converging path, which is configured to transmit heat energy into or out of the battery cell.

4. The lithium ion soft battery of claim 3, wherein the heat conducting and collecting bodies are connected to form the heat converging path by welding, bolting, or riveting.

5. The lithium ion soft battery of any one of claims 1-2, wherein the heat conducting and collecting bodies are bent towards each other to form the heat converging path.

6. The lithium ion soft battery of any one of claims 1-2, wherein the heat conducting and collecting bodies are bent to be inclined with the positive electrode plate or the negative electrode plate by an angle between 0 degree to 90 degrees, the heat conducting and collecting bodies are bent toward a single direction or opposite directions, or a portion of each of the heat conducting and collecting bodies is bent, and the portion which is bent is connected to a remaining portion of the heat conducting and collecting bodies, the remaining portion of each of the heat conducting and collecting bodies is straight.

7. The lithium ion soft battery of claim 6, wherein the portion is bent toward a single direction or opposite directions.

8. The lithium ion soft battery of any one of claims 1-2, wherein a portion of each of the heat conducting and collecting bodies is bent, and the portion which is bent is connected to a remaining portion of the heat conducting and collecting bodies, the remaining portion of each of the heat conducting and collecting bodies is straight, at least a portion of each of the heat conducting and collecting bodies defines a plurality of holes or a concave and convex surface, the holes pass through the heat conducting and collecting body and have a 3D internal structure, or at least one of the heat conducting and collecting bodies, which define a plurality of holes or a concave and convex surface, are disposed among the other heat conducting and collecting bodies, the holes pass through the heat conducting and collecting body and have a mesh structure or a 3D internal structure, or at least one of the heat conducting and collecting bodies, which define a plurality of holes or a concave and convex surface, are disposed among the other heat conducting and collecting bodies, the holes pass through the heat conducting and collecting body and have a mesh structure or a 3D internal structure.

9. The lithium ion soft battery of any one of claims 1-2, wherein a heat dissipation member is connected to the heat converging path, the heat dissipation member are a heat sink or one or more metal sheets.

10. The lithium ion soft battery of claim 9, wherein the metal sheets and the heat conducting and collecting body are made of a same material.

11. The lithium ion soft battery of any one of claims 1-2, wherein a plurality of fins are disposed among or on the heat conducting and collecting bodies, or a heat sink is disposed on the heat conducting and collecting bodies.

12. The lithium ion soft battery of any one of claims 1-2, wherein a heat exchanging device is connected to the heat converging path.

13. The lithium ion soft battery of claim 12, wherein the heat exchanging device is connected to the heat converging path by welding, bolting, gluing, or riveting.

14. The lithium ion soft battery of any one of claims 1-2, wherein each of the heat conducting and collecting bodies comprises an insulating layer, an insulating and heat conductive layer, or an insulating film on a surface thereof.

15. The lithium ion soft battery of any one of claims 1-2, wherein the at least one heat converging path is disposed at an end having a positive electrode tab, an end opposite to the positive electrode tab, or a side one, two, or three of the heat converging paths are disposed at the end having the positive electrode tab.

16. The lithium ion soft battery of claims 1, wherein the two heat conducting and collecting bodies protrude from the positive electrode plate, portions of the heat conducting and collecting bodies which protrude from the positive electrode plate are inserted into an electrolyte in the battery casing, or a heat exchanging device is disposed in the electrolyte for heating or cooling the electrolyte.

17. The lithium ion soft battery of any one of claims 1-2, wherein the heat conducting and collecting bodies are recessed with respect to the negative electrode plate, a thickness of an entirety of each of the heat conducting and collecting bodies is same as of a thickness of the interconnecting portion of the heat conducting and collecting bodies and the negative electrode plate.

18. The lithium ion soft battery of any one of claims 1-2, wherein a temperature sensor is disposed on the heat converging path.

19. The lithium ion soft battery of claim 1, wherein temperature sensor is disposed on the heat exchanging device.
